# EUROPEAN PATENT SPECIFICATION

(11) **EP 3 563 023 B1**
(45) Date of publication and mention of the grant of the patent: **01.06.2022**
(21) Application number: 17912814.5
(22) Date of filing: 12.12.2017
(51) Int. Cl.: E06B 7/23, B60J 10/265

(54) **A NEW GASKET STRUCTURE**
NEUE DICHTUNGSSTRUKTUR
NOUVELLE STRUCTURE DE JOINT D'ÉTANCHÉITÉ

(30) Priority: 27.12.2016 TR 201619724
(43) Date of publication of application: 06.11.2019
(73) Proprietor: Conta Elastik Ürünler San. Ve Tic. A.S., Gebze/Kocaeli (TR)
(72) Inventor: YESILOT, Mustafa, 41400 Gebze/Kocaeli (TR)
(74) Representative: Sevinç, Cenk
(86) International application number: PCT/TR2017/050655
(87) International publication number: WO 2018/226186

(56) References cited:
- EP-A1- 0 605 829
- EP-A2- 1 080 882
- DE-C1- 4 201 340
- JP-A- H10 111 071
- US-A- 4 510 715
- US-A1- 2002 152 687
- US-A1- 2008 122 251

## Description

### Technical field of the invention:

The invention relates to a new gasket structure with improved strength and sealing properties and which offer ease of assembly and used for assemblies of the glass structures in many different sectors.

### State of art:

Within the scope of the state of art, the gasket structures with various structure and forms are used when forming the PVC profile systems in all sectors where glass is used. The properties and structure of the gaskets used vary depending on the desired sealing values and other properties. Such gaskets, however, are generally manufactured from rubber or plastic materials. Therefore, the gasket structures used at the PVC profile systems at the sectors where glass is used present great diversity.

In the state of art, various problems are experienced concerning the gasket structures used at the assembly of the glass structures in many sectors. Such problems can also vary depending on the gasket structures and their properties. There are, however, several common problems experienced in general. The most prominent problem amongst such problems experienced with the gasket structures is that some regions of the gasket structures fold during assembly of said structures to the PVC profile system together with the glass structures, that is to say the snapping problem. This situation is generally experienced in the form where, during the assembly, the part of the gasket that should protrude from the edge of the glass structures remains underneath the glass structure. The snapping problems are frequently experienced especially during assembly of the easily formable gasket structures with high resilience values.

It is not possible to achieve sound sealing properties with the gasket structures where snapping problems are experienced during assembly. Furthermore, an unpleasant exterior appearance is obtained after assembly. In case endeavors are made for correcting the assemblies where snapping problem is experienced, then disadvantages such as prolonged assembly durations, loss of time for the laborers, etc. are encountered. Therefore, such snapping problem is an undesirable outcome experienced frequently in the present art.

Another problem experienced within the state of art is the retraction problem that is experienced as shortening of the lengths of the gasket structures cut to suitable lengths for installation into the PVC profile system in time. Such retraction problem is rather experienced at the gasket structures with low rigidity level. The retraction problems of the gasket structures applied to the PVC profiles is experienced frequently when it is failed to establish the balance between the resilience value and rigidity value of the gasket structure. Said retraction problem might also be accompanied by several other problems. When the individual trying to fit the gasket structure with shortened length to the PVC profile stretches the gasket in order to draw out the gasket length, the gasket structure might deform and get thinner. Therefore, the sealing quality of the deformed gasket structure deteriorates and its physical properties fall below the desired levels.

In the present art, oil bleeding problems that emerge in time at some part of the gasket structures used at the PVC profile systems are also experienced. The oil bleeding problem encountered when the gasket structure contains excessive oil, can be described as excretion of some of the excessive oil within the gasket structure from the pores on the gasket surface in time. Depending on this condition, the gasket surface of the installed gaskets takes an oily form and alters the gasket structure to some extent, which presents an unpleasant appearance. If the oil bleeding problem is experienced at the gaskets not yet installed and stored in stockpiles, then problems such as difficulties during assembly process of the gaskets due to oily structure, achieving low quality sealing due to modified physical properties, etc.

The patent application DE4201340C1 in the state of art relates to a sealing strip ensuring a significant tightness by combining two different raw materials in different and alternative manners by means of co-extrusion method. Said sealing strip is designed to be used on windows and it may be in different forms so as to achieve the best sealing degree according to profile structures, on which it is to be sat. Hardness degree of the raw materials used are different, however there is no significant difference between their amounts of use. Said sealing strip comprises a support structure and its position may be changed. Said support structure ensures higher sealing properties by means of the support pressure.

The patent application EP0605829A1 discloses a sealing device that is developed for windows and obtained as a result of combining two raw materials comprising different hardness values so as to achieve improved advantages particularly in terms of tightness by means of a co-extrusion method. Said sealing device discloses a structure, wherein the softer raw material is at the end portion such that it stays outside and wherein the tougher raw material is positioned at the interior portion such that it can be mounted to the window profile. After said structure is mounted to the window profile, the portion that can be seen from the outside is the part made of the soft raw material. The part made of the raw material substantially is positioned such that it is outside so as to provide higher degree of tightness. Further, said part made of the outmost soft raw material is designed such that it has a cover-like special shape so as to facilitate montage of the sealing device subject to the application.

The invention in the patent application US4510715A relates to a weather strip that is designed to prevent air passage between window profiles and sashes and is positioned on the outer portion of profile structures such that it stays between profiles and sashes. Said weather strip is made of combination of two raw material that are combined by means of co-extrusion method. A raw material, of which hardness is greater, is positioned to ends of the outermost two ends belonging to the weather strip positioned on the profile. Thus, the hard raw material stays on the area, on which the outermost flexible ends contact with the sash structure during movement of the window, thereby increasing significantly the friction resistance of the weather strip. In the related document, said weather strip ensures to store a fair amount of air between the outer two long edges by contacting with the sash structure at two point in the course of opening and closing the window. Said stored air serves as a thermal barrier and reduces the air passage between the window profile and sash. That end portions of said weather strip's two long edges contacting to the sash are made of a harder raw material makes the weather strip more durable against potential impacts.

The patent application JPH10111071A relates to a gasket structure that is provided so as to properly replace refrigerator gaskets that deform over time. Said gasket structure substantially is provided as a result of combining two raw materials with different hardness by means of a co-extrusion method. However, while carrying out the combining process, a design is provided such that a combination housing is on the structure made out of the hard raw material and a combination protrusion that can be positioned in the housing is on the structure made out of the soft raw material. There is literally a female-male mounting relation between the housing and protrusion structure on the combined raw materials. The combination protrusion is positioned in the combination housing, thereby performing the co-extrusion process. By means of structures and combination types provided, it is aimed to replace the raw material that deforms over time by new ones by users. Since the interior raw material does not expose to external factor and thus does not deform, it is planned to replace the only external raw material. The document also discloses alternative separation solutions for how the two raw materials would be separated from each other by applying a simple force when the replacement is carried out. Therefore, said document substantially relates to a study provided so as to properly replace the refrigerator gasket deformed over time by new ones.

Another patent application EP1080882A2 in the state of art relates to a laminated material formed by laminating a polyolefinic thermoplastic elastomer. The technical object of said invention is to provide a thermoplastic elastomer laminated material which undergoes no surface change and which is free from stickiness even when exposed to high temperatures. Example 3, paragraph [0086], uses 70% TPO-b with 24% oily softening agent (Z) for material A, resulting in 16,8 % of component Z. For material (B), the main body, TPO-c is used with 16 % of component Z. Therefore, the oil density in the surface layer is higher than in the main body (B). However, said invention do not solve oil bleeding, retraction, snapping and contamination problems of gasket structures.

Other patent application US 2002/152687 A1 in the state of art discloses composite strips such as weatherseals and finishing strips, and more particularly, a surface film on the composite strip, wherein the surface film is a contiguous colliquefaction of a powder coating. As mentioned in this document, composite strips are typically employed as weatherseals and these weatherseals must perform a variety of functions including the prevention of various contaminants such as moisture, dirt and debris from passing the seal.

Another problem experienced due to gasket structures bleeding oil is the contamination problems. The easily contaminated and hardly cleaned condition of the bleeding gasket structures used at the PVC profiles especially at the construction sector leads to unpleasant appearances. In order to ensure that the gasket structures used at the PVC profile systems at the construction sector are readily cleanable, it is desirable to have slippery surfaces that face outwards after the assembly. A slippery surface cannot be achieved if the amount of oil within the gasket structure is maintained at low levels, which makes cleaning the gasket structure difficult. Therefore, the amount of oil within many gasket structures is kept at high levels in order to allow establishment of slippery surface at the gasket structure used at respective sectors. However, high amount of oil within the gasket structure in order to establish slippery surface leads to excessive bleeding of the gasket structure in time, which, in turn, induces the contamination problems.

### Objective of the invention:

The objective of the invention is to be able to prevent the snapping problems that emerge during assembly of the gasket structures to the PVC profile systems.

Another objective of the invention is to eliminate contraction problems that occur at the gasket structures applied to the PVC profile systems in time.

Another objective of the invention is to prevent oil bleeding problems of the gasket structures used at the PVC profile systems in time.

Another objective of the invention is to prevent contamination problems experienced by the gasket structures used at the PVC profile systems due to oil bleeding.

The invention is defined by the features of claim 1.

### Description of the Figures:

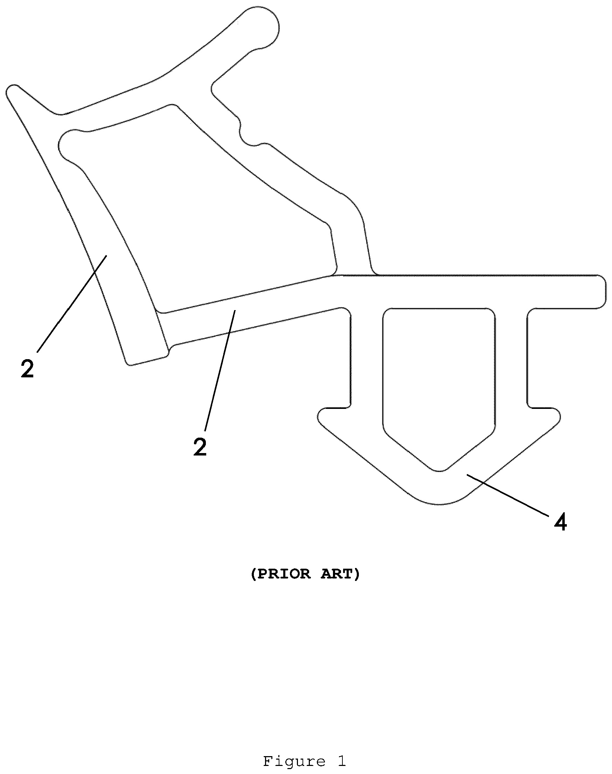

- Figure 1.: the gasket structure with main body comprising of two materials within the state of art

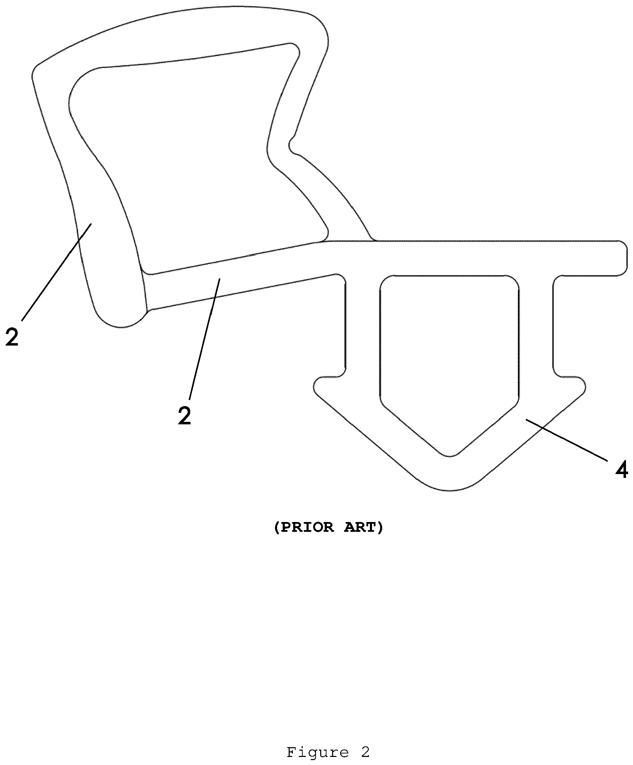

- Figure 2.: the alternate gasket structure with main body comprising of two materials within the state of art
- Figure 3.: Gasket structure - Sectional view
- Figure 4.: Gasket structure - Alternate structure-Sectional view

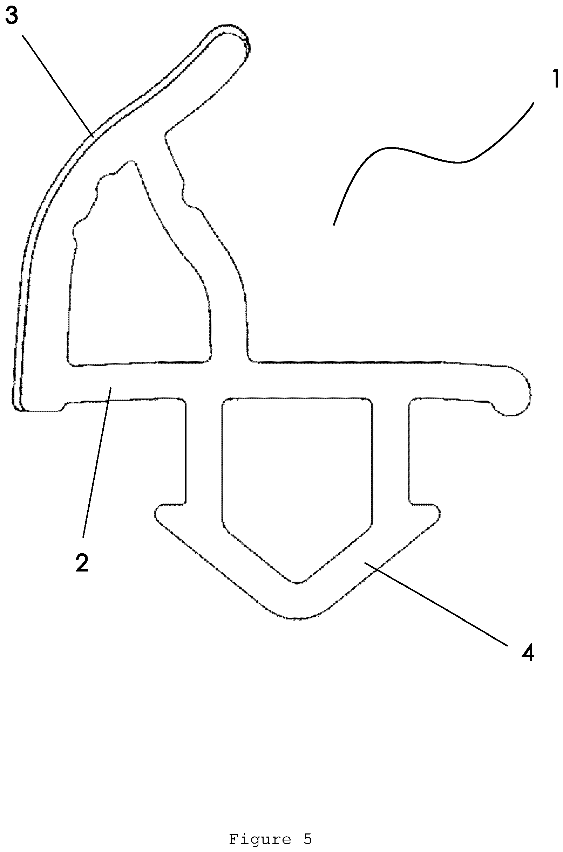

- Figure 5.: Gasket structure - Second alternate structure-Sectional view

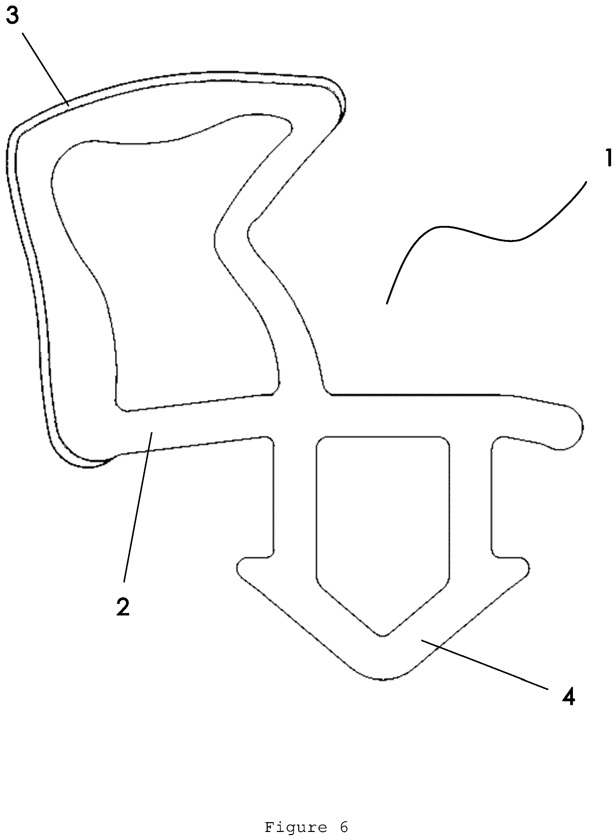

- Figure 6.: Gasket structure - Third alternate structure-Sectional view
- Figure 7.: The gasket structure where the main body is formed by two materials - Sectional view
- Figure 8.: The gasket structure where the main body is formed by two materials - Alternate structure-Sectional view
- Figure 9.: The gasket structure where the main body is formed by two materials - Second alternate structure - Sectional view

Each part illustrated on the figures is numerated, and the names of such parts corresponding to such numbers are as follows:
1. Gasket structure
2. Main Body
3. Additional Piece
4. Assembly Protrusion
5. Junction Point

### Description of the Invention:

The invention relates to a novel gasket structure (1) designed for use on the PVC profile systems used at fields such as the automotive sector, construction sector etc. Said gasket structure (1) is produced with co-extrusion method where a single product is obtained by combination of multiple raw materials during the same process.

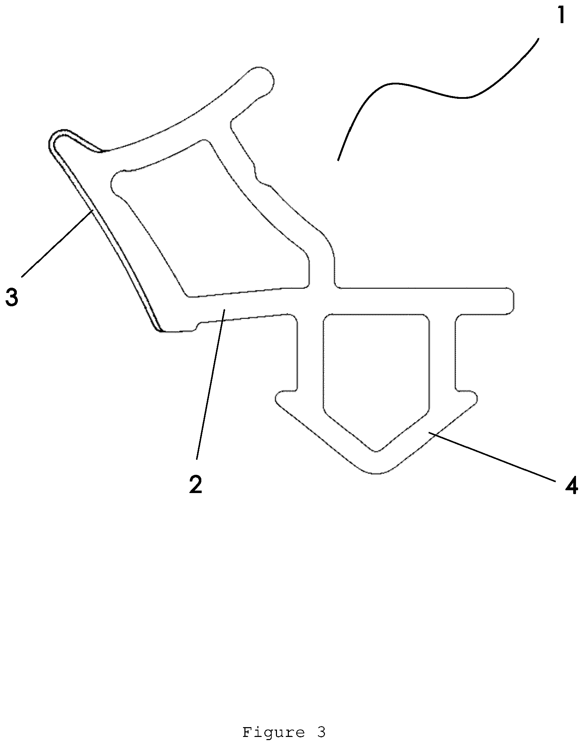

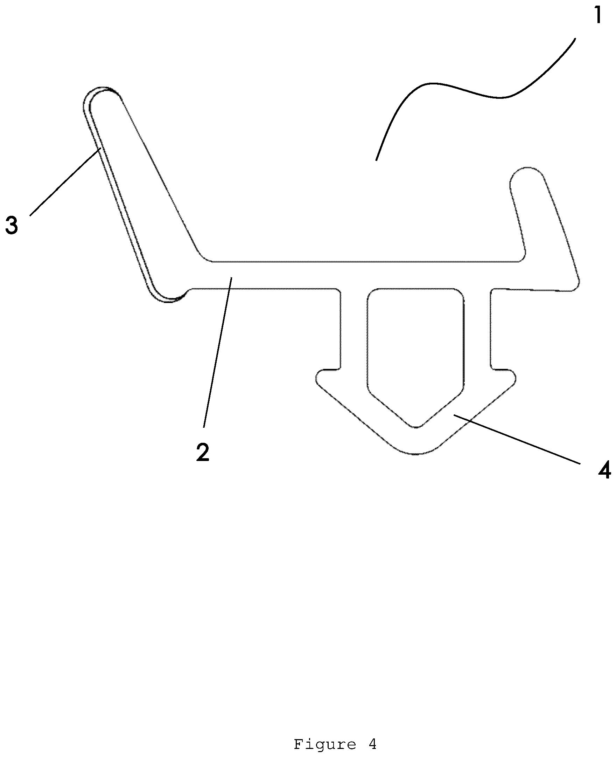

As can be seen from Figure 3 and Figure 4, the gasket structure (1) of the invention is obtained as a result of combining at least two raw materials with different strength values and different properties. Said gasket structure (1) comprises of the main body (2) and the additional piece (3). The shape of the gasket structure (1) can have alternate embodiments depending on the PVC profile system where such gasket structure will be used, and on the desired sealing properties. However, as can be seen from any of the figures, an assembly protrusion (4) designed to fit into the PVC profile system over the bottom section of the main body (2) of the gasket structure (1) is available at all alternate structures. The general design of the gasket structure (1) can have alternate shapes provided that the shape of the assembly protrusion (4) remains the same.

The main body (2) forming a large portion of the gasket structure is produced from a material that contain less amount of oil when compared to the PVC profile systems. Therefore, problems such as oil bleeding in time as arising from the main body (2) is not experienced. The additional piece (3), on the other hand, is arranged on the portion of the gasket structure (1) that is exposed and in contact with the air after being assembled to the PVC profile system. Therefore, the users see only the additional piece (3) and can contact only with the additional piece (3) during assembly. The main body (2) cannot be seen by the users, and the users cannot get in contact with the same in anyway as PVC profile remains at the interior section.

The area covered by the additional piece (3) can vary depending on the shape of the gasket structure (1) used. As the additional piece (3) is arranged in such manner to fully cover the exposed section of the gasket structure (1) after its assembly to the PVC profile system, the size of the surface area it covers might vary depending on the shape of the gasket structure (1). In the figures, variation of the area covered by the additional piece (3) depending on the variation of the profile of the gasket structure (1) used can be seen clearly on the alternate structures.

The additional piece (3) is manufactured from a material with lower elasticity and higher rigidity value when compared to the main body (2). As the portion of the gasket structure (1) that leads to snapping due to folding during assembly to the PVC profile systems is to portion where the additional piece (3) is arranged, said folding and snapping problems are minimized due to more rigid structure of the additional piece (3) compared to the main body (2). The assembly process for the gasket structure (1) is further facilitated by virtue of the physical properties of the elements that form said gasket structure (1). This also allows the assembler to perform the assembly process more rapidly. Therefore, the snapping problems experienced in the state of art are reduced and an ease of assembly is provided. Moreover, the problems of diminished sealing property of the gasket structure (1) due to the difficulties and troubles experienced during assembly in the state of art are also prevented.

As the main body (2) structure is not visible from outside after the assembly, the level of lubricity is not important anymore. The level of lubricity of the main body (2) is low due to low oil quantity and thus, the oil bleeding problems are also prevented in this manner. On the other hand, as the portion of the gasket structure (1) that is visible from outside and that can be contacted after assembly to the PVC profile systems is the additional piece (3) portion, the oil percentage value of the additional piece (3) is higher than the main body (2). In this manner, the surface of the additional piece (3), which is the portion that the users can touch after the assembly, can have desired lubricity. Moreover, problems such as oil bleeding are not experienced as the volume of the additional piece (3) structure is extremely low and as the wall thickness of the same is at low values despite high density of the amount of oil within the structure of the additional piece (3). In this manner, situations such as oil bleeding by additional piece with high oil percentage and main body with low oil percentage are prevented.

The desired level of lubricity for the contacted portion of the gasket structure (1) after assembly can be achieved due to high oil percentage of the additional piece (3)structure. Said level of lubricity can be adjusted to the desired levels by modifying the oil percentage of the additional piece (3) and the rates of other values in its structure. As the level of lubricity of the additional piece (3) can be adjusted to desired levels, a gasket structure (1) which can be cleaned easily and which has anti-dust properties is obtained.

Therefore, said gasket structure (1) offers ease of maintenance and cleaning to the users after assembly. As problems such as oil bleeding do not exist, the dust collection level of the gasket structure (1) remains at minimum values, and the contamination problems are also minimized. The stock and shelf life of the gasket structure (1) is prolonged due to elimination of oil bleeding and dust collection problems.

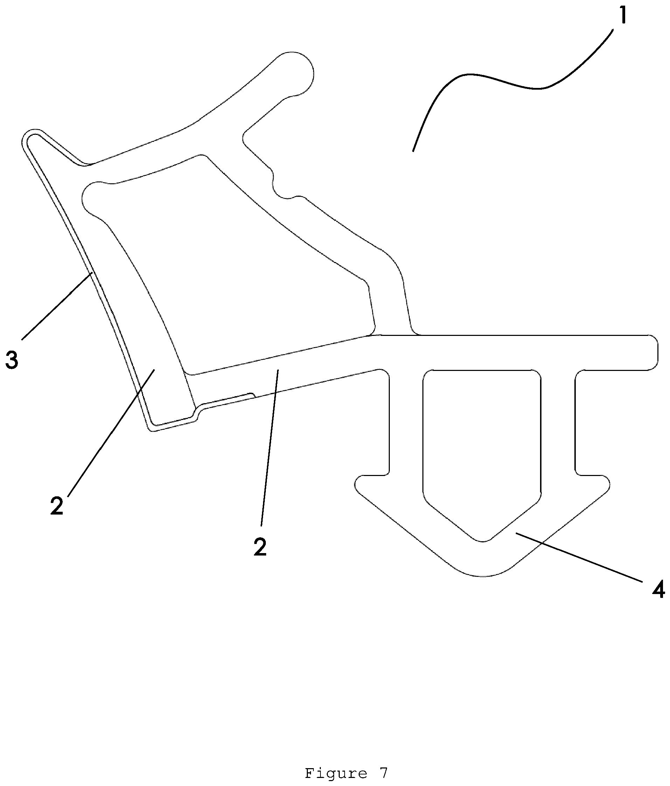

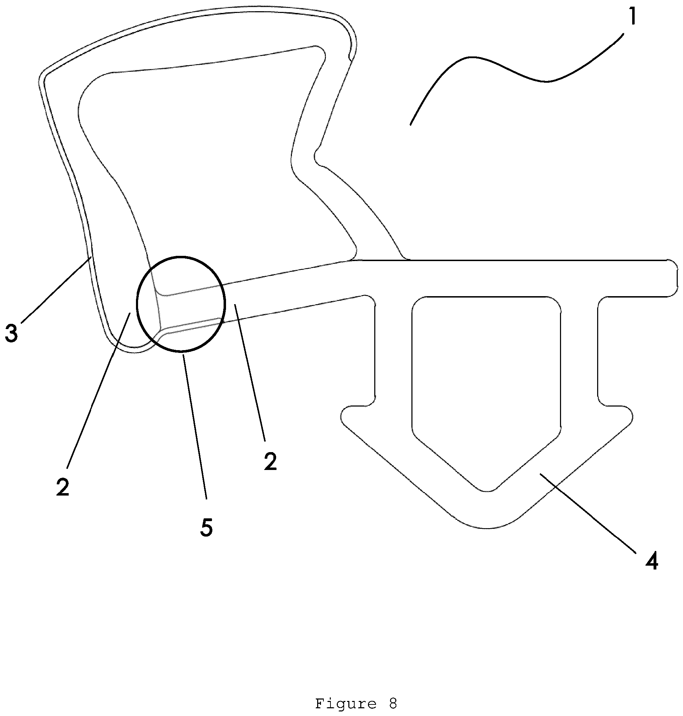

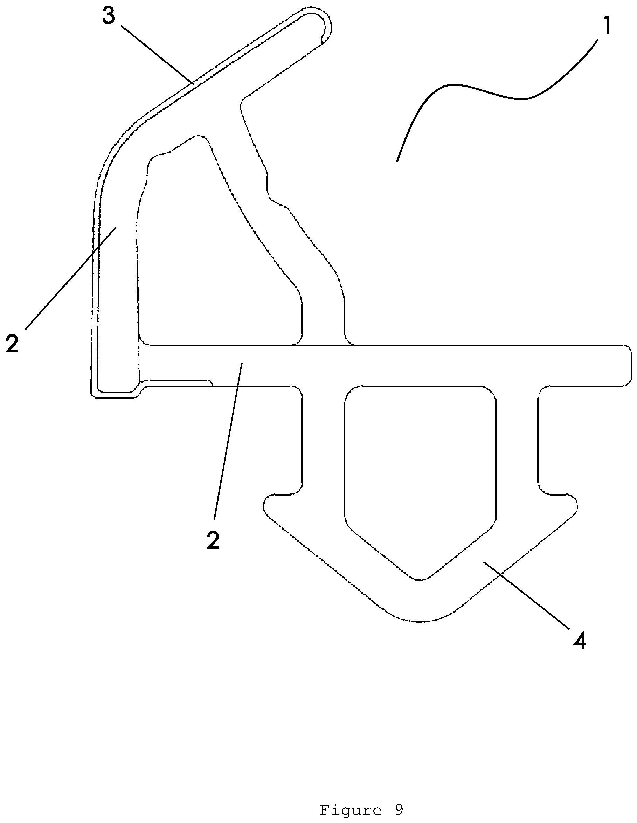

An alternate version of the gasket structure (1) of the invention can be seen in Figure 7, Figure 8 and Figure 9. The main body (2) structure of the alternate structures illustrated in said figures is not monolithic but comprises of combination of two different materials. The physical properties of the materials forming the main body (2) are close to each other and their rigidity values are lower compared to the additional piece (3). Moreover, their oil ratios are also close to each other and higher than the additional piece (3). In order to prevent rupturing problems that might be experienced at the junction points (5) of the main body (2) structures formed by combination of two materials with said properties, the junction points (5) that are close to the additional piece (3) are protected by extending the additional piece (3) to some extent.

In the alternate structures illustrated in Figure 7, Figure 8 and Figure 9, in case the materials forming the main body (2) are joined at a point close to the additional piece (3), the junction point (5) close to the additional piece (3) is arranged underneath the additional piece (3) by increasing the area of the main body (2) surface covered by the additional piece (3). This prevents rupture of the junction point (5) of the two materials forming the main body (2) that is close to the additional piece (3) in time due to usage. As the additional piece (3) is adhered to both materials of the main body (2), it would not be possible to separate the junction points (5) of the materials from each other. In particular, in case the materials forming the main body (2) are foamed materials, as such materials will contain air gaps therein, the mating surfaces at said junction points (5) can diminish, thus leading to extremely low strength for the junction points (5). Adhesion of the additional piece (3) to both materials forming the main body (2) in such manner that surrounds the junction point (5) eliminates the problems where the junction points (5) separate from each other. Therefore, the service life of said gasket structures (1) is improved significantly as the additional piece (3) is applied to the main body (2) structures formed by combination of two materials in this manner.

The reason for applying the additional piece (3) embodiment illustrated in Figure 7, Figure 8 and Figure 9 as an alternate version of the structure of the invention only on the junction points (5) that are close to the additional piece is that the problems of disjunction rather occur at these points. In cases where the main body (2) is formed from combination of two materials, the junction point (5) where the disjunction problems are experienced more frequently out of the two junction points (5) is the junction point that is close to the additional piece (3). The root cause of such disjunction is that said junction point (5) is the junction point (5) that is closest to the external environment. Accordingly, the point suffering the highest strain together with the additional piece (3) is also this junction point (5). Therefore, the separation problems of two materials are significantly reduced as the additional piece (3) covers and protects said junction point (5).

The high rigidity level of the additional piece (3) further prevents the retraction problems experienced in the state of art. Although the rigidity level of the main body (2) is lower than the additional piece (3), the additional piece (3) prevents contraction of the length of the main body (2) in time as the additional piece (3) structure and the main body (2) are adhered to each other. Therefore, undesired situations such as contraction of the gasket structure (1) in time are prevented. This also allows prolonged service life for the gasket structure (1).

By virtue of the gasket structure (1) of the invention manufactured as a result of combining two materials with co-extrusion method, a novel gasket structure (1) with no diminishing sealing property that allows ease of assembly has been propounded by eliminating the snapping problems experienced at the gasket structures (1) assembled to the PVC profile systems within the prior art. The oil bleeding problems of the gasket structure (1) in time are prevented, thus indirectly prolonging service life, stock and shelf lives of the gasket structure (1). Moreover, the retraction problems caused by contraction in time is also minimized by achieving a gasket structure (1) with more rigid structure. By virtue of the gasket structure (1) of the invention, a novel gasket structure (1) with good level of lubricity, that is easily cleanable and has anti-dust properties has been propounded.

## Claims

1. A gasket structure (1) that can be used on the PVC profile systems to be used at automotive sector or construction sector that offers ease of assembly to the users and improved strength and sealing properties, that comprises a main body (2) which comprises an assembly protrusion (4) in order to fit into the PVC profile system, an additional piece (3) that is combined with the main body (2) by means of a co-extrusion method, **characterized by** comprising;
• a main body (2) wherein the main body (2) is monolithic; or wherein the main body (2) comprises a combination of two materials that are joined in a junction point (5) which is being covered by the additional piece (3) in order to prevent rupture of the junction point (5),
• an additional piece (3) that is positioned to cover completely the outdoor section contacting with air after the gasket structure (1) is mounted with the PVC profile system, that has higher oil density compared to the main body (2) to prevent oil bleeding, that comprises a volume smaller than volume of the main body (2), that prevents the retraction of the main body (2) due to its higher rigidity level than the main body (2), and that may be in different geometries depending on shape of the gasket structure (1) .

## Patentansprüche

1. Dichtungsstruktur (1), welche für PVC-Profilsysteme im Automobilsektor oder im Bausektor verwendet werden kann, die den Benutzern eine einfache Montage und verbesserte Festigkeit und Dichtungseigenschaften bietet, **dadurch gekennzeichnet, dass** sie umfasst;
• Hauptkörper (2), der einen Montagevorsprung (4) zum Aufsetzen auf das PVC-Profilsystem umfasst,
• zusätzliches Teil (3), welches mit dem Hauptkörper (2) mittels eines Koextrusionsverfahrens verbunden ist, welches positioniert ist, um den mit Luft kontaktierenden Außenbereich vollständig abzudecken, nachdem die Dichtungsstruktur (1) mit dem PVC-Profilsystem montiert ist, welches eine geringere Öldichte im Vergleich zum Hauptkörper (2) aufweist, um ein Ölausbluten zu verhindern, welches ein kleineres Volumen als das Volumen des Hauptkörpers (2) enthält, welches einen kleineren Elastizitätsmodul als den des Hauptkörpers (2) aufweist, welches aus einem anderen Material als der Hauptkörper (2) hergestellt ist wobei das Material des zusätzlichen Teils (3) einen höheren Steifigkeitswert als der des Hauptkörpers (2) aufweist und in Abhängigkeit von der Form der Dichtungsstruktur (1) unterschiedliche Geometrien aufweisen kann,
• Verbindungsstelle (5) am Hauptkörper (2), wobei die Verbindungsstelle (5) durch das zusätzliche Teil (3) abgedeckt ist, um ein Aufreißen der Verbindungsstelle (5) zu verhindern.

## Revendications

1. Une structure de joint (1) qui peut être utilisée sur les systèmes de profilés PVC du secteur automobile ou du secteur de la construction qui offre une facilité d'assemblage pour les utilisateurs et des propriétés de résistance et d'étanchéité améliorées, **caractérisée en ce qu'**elle comprend;
• corps principal (2) qui comprend une protubérance d'assemblage (4) pour s'appuyer sur le système de profilés PVC,
• pièce supplémentaire (3) combinée avec le corps principal (2) au moyen d'une méthode de co-extrusion, positionnée pour couvrir complètement la section extérieure qui est en contact avec l'air après le montage de la structure de joint (1) avec le système de profilés PVC, qui a une densité d'huile plus faible comparée au corps principal (2) pour prévenir les fuites d'huile, qui comprend un volume plus petit que le volume du corps principal (2), qui a un module d'élasticité plus petit que celui du corps principal (2), qui est fabriqué à partir d'un matériau différent de celui du corps principal (2) dans lequel le matériau de la pièce supplémentaire (3) a une valeur de rigidité supérieure à celle du corps principal (2) et qui peut avoir des géométries différentes en fonction de la forme de la structure de joint (1),
• point de jonction (5) sur le corps principal (2) dans lequel le point de jonction (5) est recouvert par la pièce supplémentaire (3) pour prévenir la rupture du point de jonction (5).
